Europäisches Patentamt

European Patent Office

Office européen des brevets

(11) Publication number: **0 020 123**
A1

# EUROPEAN PATENT APPLICATION

(21) Application number: **80301749.0**

(22) Date of filing: **28.05.80**

(51) Int. Cl.³: **B 01 J 25/00,** B 01 J 31/06

(30) Priority: **31.05.79 GB 7919054**

(71) Applicant: **A.O.C.M. LIMITED, Tame Street, Stalybridge, Cheshire (GB)**

(43) Date of publication of application: **10.12.80 Bulletin 80/25**

(72) Inventor: **Nayler, Peter, 19 Beechfield, Sandal Wakefield, West Yorkshire (GB)**

(84) Designated Contracting States: **AT BE CH DE FR IT LI LU NL SE**

(74) Representative: **Mock, Hans et al, MARKS & CLERK Scottish Life House Bridge Street, Manchester M3 3DP (GB)**

(54) **Raney catalyst compositions and their preparation.**

(57) A non-pyrophoric Raney catalyst composition comprises particulate Raney catalyst dispersed in a solid wax, fat or organic polymer which intimately coats the catalyst thereby rendering it non-pyrophoric. Suitably the composition comprises 40–80% of the catalyst and 20–60% of the fat, wax, or organic polymer. The composition is prepared by rendering wet Raney catalyst particles oleophilic by a surface active agent and dispersing the oleophilic particles in molten wax, fat or organic polymer and solidifying the composition.

1.

RANEY CATALYST COMPOSITION

The present invention relates to catalysts
of the type known as Raney catalysts.

Raney catalysts, for example Raney Nickel
and Raney Cobalt, are well known and are used,
for example, as catalysts in hydrogenation
reactions. The catalysts are generally
prepared by digestion of an alloy of the
catalytic metal and aluminium with an alkali,
usually caustic soda or caustic potash. The
digestion proceeds by dissolution of the alum-
inium by the alkali with production of
hydrogen and, at the end of the reaction, there
remains catalytic metal of high surface area
and having adsorbed hydrogen.

However the Raney catalyst is pyrophoric
in the dry state and for this reason is

2.

frequently supplied, transported and used in water. Even in this state however the immersed catalyst is hazardous to manipulate since spillages during manufacture, transport or use allows the protective water to evaporate leaving the pyrophoric catalyst as a fire hazard. The disadvantage is of course particularly acute where there is a chance of the catalyst/water mixture spilling onto the clothing of personnel engaged in its handling.

It is an object of the invention to provide a Raney catalyst composition which is safe and easy to handle and a method for producing such a composition.

According to a first aspect of the present invention there is provided a catalyst composition comprising particulate Raney catalyst dispersed in a solid fat, wax or organic polymer.

According to a second aspect of the present invention there is provided a method of preparing a catalyst composition comprising displacing water from the surface of a wet particulate Raney catalyst, with a surface active agent thereby rendering the catalyst particles oleophilic, dispersing the oleophilic particles in a molten fat, wax or organic polymer which is solid at ambient temperature, and solidifying the dispersion.

3.

In the catalyst composition of the invention, the particles of Raney catalyst are dispersed in, and are intimately coated with, the solid wax, fat or organic polymer material which acts as a barrier to attack of the metal by atmospheric oxidation, thereby preventing conflagration of the catalyst. The catalyst composition may be in any physical form, e.g. lumps, flakes, pellets, or powder but irrespective of the particular form used the catalyst remains non-pyrophoric even if metal which was wholly within the dispersion is exposed by breaking up the composition, this being due to the intimate coating of the catalytic metal by the fat, wax or organic polymer.

Any Raney catalyst may be used for producing the catalyst composition. Examples are Raney Nickel, Raney Cobalt, Raney Copper and Raney Iron. The catalyst may also include a promoter such as nickel, cobalt, zirconium, chromium molybdenum, iron, copper, silver and palladium, as conventionally used for Raney catalysts. Generally up to about 10% by weight of promoter based on the weight of the Raney catalyst may be used, and it is possible for the Raney metal to contain two or more promoters.

The waxes, fats and organic polymers in which the Raney catalyst may be dispersed may be selected from a wide range of products.

4.

Generally the wax, fat or polymer will be molten at a temperature below 100°C since this allows easy production of the catalyst composition using steam heating to melt the wax, fat, or polymer. The wax, fat or polymer will also be chosen depending on the reaction temperature at which the catalyst composition is to be used since it is desirable that all of the wax, fat or polymer be melted or dissolved at this temperature in order to liberate the catalytic metal.

Waxes which may be used are natural or synthetic waxes. Examples are hydrocarbon waxes such as paraffin waxes and microcrystalline waxes both of which are available with a range of melting points. For example paraffin wax with a melting point of 55-56°C or microcrystalline wax with a melting point of 65-70°C may be used. Alternatively waxes comprised of polyethylene oxide condensation products may be used. As a still further alternative the wax may be a waxy material such as a long chain alcohol or glycol. The wax used should not contain any groupings which react adversely with the catalytic metal. The particular wax chosen will depend on the melting point required.

Fats which may be used are glyceride esters, and may by animal or vegetable fats e.g. hard tallow (hydrogenated tallow), soft tallow, hardened rape seed oil, ground nut oil, or any hydrogenated oil.

Various organic polymers are avilable having low melting points and may be used for encapsulating the Raney catalyst. Examples are hydrocarbon polymers, such as polyethylene. Halogen containing polymers

5.

should be avoided as they will have a detrimental effect on the catalyst metal.

The manufacture of the catalyst composition starts with a wet Raney catalyst, such as would normally be stored under water, and it is necessary to displace the water from the surface of the catalyst metal by a wetting agent to render the metal oleophilic so that it may readily be dispersed in the wax, oil or polymer. The wetting agent may be an anionic, cationic or non-ionic surface active agent. Examples of suitable cationic surface active agents are fatty amines, synthetic amines, cyclic amines of the imidazoline type and derivatives of these amines, all containing at least one $C_{6-22}$ carbon chain. For example an organic acid salt of the amine or amine derivative may be used. Suitable amines are those derived from animal tallow, soya bean oil, coco oil, rape seed oil and fish oils. The acids used for forming the amine salts may be for example acetic acid or oleic acid.

A particularly preferred cationic surface active agent is the dioleate salt of N-tallow propylene diamine.

Anionic surface active agents which may be used include metal soaps, e.g. potassium oleate, sodium oleate and those derived from coco oil.

A suitable non-ionic surface active agent is lecithin.

6.

The catalyst composition of the invention is prepared from a wet particulate Raney catalyst, such as one which is stored under water. It is preferred that all excess water be decanted to leave a poste-like composition which comprises 50-70% of the catalytic metal and 30-50% of water. Greater amounts of water can be tolerated but may be difficult to remove during the subsequent stages of preparation.

The wet particulate catalyst composition is added to a steam-jacketed mixer of the cement mixer type, the wetting agent is added, and mixing with heating is commenced. The amount of wetting agent used will generally be $\frac{1}{2}$ - 1% by weight based on the total weight of catalyst metal and water. The purpose of the wetting agent is to provide a molecular coating of the agent on the metal thereby displacing water from the surface of the metal, which thus becomes oleophilic. Amounts of wetting agents less than $\frac{1}{2}$% may be used but long times may be required for rendering the catalyst particles oleophilic. Amounts of wetting agent significantly greater than 1% may prove to be detrimental since the catalyst particles may become coated with more than a monomolecular layer of wetting agent, the molecules of the additional layers of wetting agent possibly being oriented so as to render the catalyst particles hydrophilic.

7.

The next stage is the addition of the molten wax, fat or polymer to the heated contents of the mixer. The contents of the mixer should be above the temperature at which the wax, polymer or fat is molten. If steam heating is used, the wax, polymer or fat will obviously be one which melts at a temperature appreciably less than $100^{o}C$, since the temperature of contents of the mixer will probably not exceed $90^{o}C$, and will for preference be about $70^{o}C$.

Due to the oleophilic nature of the catalyst particles, they preferentially dispersed in the wax, oil or polymer phase and become intimately coated therewith. Water is displaced and forms a separate layer which may be periodically decanted from the mixer. Mixing is continued until the catalyst particles are uniformly distributed in the molten wax, fat or polymer. If the water is not decanted it may re-emulsify in the wax, fat or polymer and be present in the finished catalyst composition. This may/be desirable for certain however applications of the catalyst composition.

It should be noted that it is possible to add the fat, wax or polymer at the same time as the wetting agent to the heated contents of the mixer. This method does however require longer mixing times since the metal particles are only slowly rendered oleophilic by the wetting agents.

The amount of fat, wax or polymer used

8.

will preferably be such that the finished
catalyst composition contains 20-60% by
weight of the wax, fat or polymer.  If
amounts less than 20% are used the composition
will contain a percentage of catalyst particles
greater than that permitted by regulations for
the transport of Raney catalysts.  Amounts of
wax, fat or polymer above 60% give rise to
difficulties in displacing all of the water.
In fact, if amounts greater than 40% are used,
the wax, fat or polymer should be added in at
least two stages with intermediate decantation
of as much water as possible, the final amount
of fat, wax or polymer being added slowly with
agitation to prevent separation of the catalyst
particles.

If desired processing aids, e.g. activated
charcoal or kieselguhr (filter aid) may be added
improving the properties of the finished composition.
For preference the processing aid is added after all
water has been decanted from the melt.  Amounts of
the processing aid which give 1 to 50% of the aid
in the finished composition may be used.

Once the catalyst particles, and any
processing aid, have been uniformly distributed
in the molten fat, wax or polymer the final
solidified catalyst composition may be produced
in a number of ways.  Firstly, the composition
may simply be dumped from the mixer and allowed
to solidify as a block.  Entrained will separate
from the block, but emulsified water will remain
in the matrix.  The block may be processed to
produce powder, pellets

9.

or lumps as desired. Alternatively drops of the molten composition may be solidified to form pellets, or the molten composition may be solidified as a thin layer on a cool rotating drum and subsequently flaked.

The solidified composition may be handled with complete safety and may be used in most reactions in which Raney catalysts would normally be used. A catalyst composition for use in any particular reaction will have been formulated such that the fat, wax or polymer melts at below the reaction temperature. Consequently at the beginning of the reaction the fact, wax or polymer will melt/to leave free catalyst. Since the amount of catalyst composition used in any particular reaction will be small, the small amount of fat, wax or polymer introduced into the reaction will not generally be detrimental.

It is found that the catalytic activity of the Raney catalyst is not impaired by its encapsulation in the fat, wax or polymer and the activity is indeed similar to that of a conventional Raney catalyst kept under water.

It should be appreciated that, whilst the invention is particularly applicable to the production of catalyst compositions containing fresh Raney catalyst, it is also possible to encapsulate spent Raney catalysts, which may also be pyrophoric. The spent catalyst could

10.

then be supplied to steel making plants for incorporation of the Raney metal as an alloying element in the steel, the fat, wax or polymer simply burning off at steel making temperatures.

The invention is illustrated in the following Examples.

EXAMPLE I

41.6 kilos of a Raney Nickel/water paste containing 25 kilos of nickel were introduced into a steam heated jacketed pan with rotary agitator and agitated with heating until the temperature of the paste reached 70°C. The dioleate salt of N-tallow propylenediamine (250g) was then added to the pan and mixing continued for 5 minutes in order to render the nickel particles oleophilic.

Meanwhile, 10.3 kilos of a paraffin wax (melting point 54 - 57°C.) were melted and heated to 70°C. The wax was added to the mixer in 2 kilogram portions over a period of 5 minutes.

At the end of the wax addition, the mixer was stopped and separated water was decanted. Mixing was then continued for a total of 10 minutes with the mixing being stopped every two minutes to decant more water. At the end of this procedure no more

11.

water could be decanted from the mixture.

The mixture was then tipped onto a cold solid surface and allowed to cool and solidify with occasional turning to allow entrained water to run away.

The resultant catalyst composition was a solid which could be broken into lumps.

This catalyst composition was used as the catalyst for the hydrogenation of soya bean oil at 180°C and atmospheric pressure with the amount of catalyst being 0.15% by weight of nickel based on the total weight of reactants. By way of comparison, the hydrogenation was repeated but using, as catalyst, a conventional Raney Nickel catalyst which had been stored under water. This conventional catalyst was in fact taken from the same batch as used to prepare the catalyst composition of the invention.

In both cases, the hydrogenation reaction was followed by the loss of iodine value. The loss of iodine value was about the same for both reactions thus indicating that the encapsulation of the Raney Nickel in the wax did not affect its activity.

This example could be repeated using the free N-tallow propylenediamine as the surface active agent with similar results.

12.

## EXAMPLE II

100g of a Raney Nickel/water paste containing 60g. of nickel were heated to 70°C and 0.5g of potassium oleate (anionic surfactant) was added with stirring to render the metal particles oleophilic. Subsequently 25 grams of the molten wax used in Example I at a temperature of 70°C were added to the metal particles with mixing. Water was decanted periodically and finally the molten mixture was poured onto a cool surface and allowed to solidify.

A solid non-pyrophoric catalyst composition was obtained.

## EXAMPLE III

Example II was repeated but using lecithin as the surface active agent. Similar results to those produced from Example II were obtained.

## EXAMPLE IV

Three catalyst compositions were produced using hydrogenated tallow and various surface active agents. The general procedure outlined in Example II was followed save that the hydrogenated tallow was substituted for the paraffin wax, and the surface active agent used in this example were the dioleate salt of N-tallow propylenediamine, potassium oleate

0020123

13.

and lecithin.

In all three cases water was displaced from the Raney Nickel paste on the addition of the wax and the water could be decanted. The melt could be solidified to produce a non-pyrophoric catalyst composition.

EXAMPLE V

The procedure of Example II was repeated but using soft tallow in place of the wax and also using the dioleate salt of N-tallow propylenediamine as the surface active agent. Once again, water was displaced from the Raney Nickel paste and there was ultimately produced a non-pyrophoric catalyst composition.

EXAMPLE VI

The general procedure of Example II was followed to produce a catalyst composition using tetradecyl alcohol (myristyl alcohol) as the wax. Two compositions using this wax were prepared, one using the dioleate salt of N-tallow propylenediamine as the surface active agent and the other using potassium oleate as the surface active agent.

In both cases, water could be decanted from the molten composition and there was ultimately produced a solid non-pyrophoric catalyst composition.

14.

## EXAMPLE VII

A catalyst composition was produced using 1,12-dodecanediol as the wax and the dioleate salt of N-tallow propylenediamine as the surface active agent. The general procedure of Example II was followed save that the wax was heated to $100^{\circ}C$ prior to addition to the nickel.

Water separated out after the addition of the wax and there was ultimately produced a solid non-pyrophoric catalyst composition.

## EXAMPLE VIII

Example VII was repeated but using, as the wax, a polyethylene glycol having a molecular weight of 4,000 available from BASF under the name Pluriol E4000.

Once again water was separated during mixing with the wax and there was ultimately obtained a solid non-pyrophoric catalyst composition.

## EXAMPLE IX

The procedure of Example V was repeated with the addition of 10g of decolourising charcoal after water had been decanted. The resultant mixture could be solidified to produce a non-pyrophoric catalyst composition incorporating the decolourising charcoal

0020123

15.

CLAIMS

1.   A catalyst composition comprising
particulate Raney catalyst dispersed in a solid
fat, wax or organic polymer.

2.   A catalyst composition as claimed in claim
1 wherein the composition comprises 40-80% of
the catalyst and 20-60% of the fat, wax or
organic polymer.

3.   A catalyst composition as claimed in claim
1 or 2 wherein the catalyst is dispersed in a
wax which is a hydrocarbon wax.

4.   A catalyst composition as claimed in claim
3 wherein the hydrocarbon wax is a paraffin wax
or a microcrystalline wax.

5.   A catalyst composition as claimed in claim
1 or 2 wherein the catalyst is dispersed in a
fat which is hard tallow, soft tallow, hydrogenated
rape seed oil or ground nut oil.

6.   A catalyst composition as claimed in any
one of claims 1 to 5 wherein the Raney catalyst
is Raney Nickel.

7.   A method of preparing a catalyst composition
comprising displacing water from the surface of
a wet particulate Raney catalyst with a surface
active agent thereby rendering the catalyst
particles oleophilic, dispersing the oleophilic

16.

particles in a molten fat, wax or organic polymer
which is solid at ambient temperature, and
solidifying the dispersion.

8. A method as claimed in claim 7 wherein the
wet particulate Raney catalyst comprises
50-70% by weight of the catalytic metal and
30-50% by weight of water.

9. A method as claimed in any one of claims 1 to 8
wherein the surface active agent is cationic.

10. A method as claimed in claim 9 wherein
the cationic surface active agent is a fatty
amine, synthetic amine, cyclic amine of the
imidazoline type or a derivative thereof,
having a $C_{6-22}$ carbon chain.

11. A method as claimed in claim 10 wherein
the cationic surface active agent is the
dioleate salt of N-tallow propylene diamine.

12. A method as claimed in claim 7 or 8
wherein a non-ionic surface active agent is
used and the surface active agent is lecithin.

13. A method as claimed in any one of claims
7 to 12 wherein the amount of surface active
agent used is $\frac{1}{2}$-1% by weight of the wet
particulate catalyst.

14. A method as claimed in any one of claims
7 to 13 wherein the catalyst particles are

17.

rendered oleophilic by the surface active
agent prior to addition of the wax, fat or
polymer.

15.  A method as claimed in any one of claims
7 to 14 wherein the amount of wax, fat or polymer
used is such as to produce a finished composition
comprising 40-80% of the catalyst and 20-60%
of the fat, wax or organic polymer.

16.  A method as claimed in any one of claims
7 to 14 wherein water is removed during
dispersion of the catalyst particles in the
fat, wax or polymer.

17.  A method as claimed  in any one of claims
7 to 15 wherein a wax is used and the wax is a
hydrocarbon wax.

European Patent Office

**EUROPEAN SEARCH REPORT**

0020123

EP 80 30 1749

| | **DOCUMENTS CONSIDERED TO BE RELEVANT** | | CLASSIFICATION OF THE APPLICATION (Int. Cl. ³) |
|---|---|---|---|
| Category | Citation of document with indication, where appropriate, of relevant passages | Relevant to claim | |
| | DE – B – 1 186 445 (NOPCO CHEMICAL) <br><br> * Claim 1 * <br> -- | 1 | B 01 J 25/00 <br> 31/06 |
| A | US – A – 4 049 580 (L.L ODEN) <br><br> * Abstract * <br> ---- | 1,6 | |

**TECHNICAL FIELDS SEARCHED (Int.Cl. ³)**

B 01 J 25/00
25/02
31/06
37/02

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 15.08.1980 | THION |

EPO Form 1503.1 06.78